# EUROPÄISCHE PATENTSCHRIFT

(11) **EP 1 384 759 B1**
(45) Veröffentlichungstag und Bekanntmachung des Hinweises auf die Patenterteilung: **28.02.2007**
(21) Anmeldenummer: 03012961.3
(22) Anmeldetag: 07.06.2003
(51) Int. Cl.: C09D 5/03, C09D 177/00, C09D 177/02, C09D 177/06, C08J 3/14

(54) **Polyamid-Wirbelsinterpulver für das Dünnschichtwirbelsintern**
Polyamide powder used for forming thin coatings using fluidized bed sintering
Poudre de polyamide pour revêtements en couche mince par frittage en lit fluidisé

(30) Priorität: 23.07.2002 DE 10233334
(43) Veröffentlichungstag der Anmeldung: 28.01.2004
(73) Patentinhaber: Degussa GmbH, 40474 Düsseldorf (DE)
(72) Erfinder: Heinrich, Dirk, 45699 Herten (DE); Scholten, Heinz, Dr., 45721 Haltern am See (DE)

(56) Entgegenhaltungen:
- EP-A- 0 536 791
- EP-A- 0 863 174
- DE-A- 4 421 454
- US-A- 4 687 838

## Beschreibung

Polyamid-Pulver auf Basis Polyamid 11 und Polyamid 12, die speziell für das Wirbelsinterverfahren entwickelt wurden, weisen in der Regel einen mittleren Korndurchmesser d 50 nach DIN EN ISO 4610 von 95 bis 120 µm auf.

Typischerweise zeigen Sie eine Schüttdichte nach DIN 53 466 von 400 bis 600 g/l.

Die Pulver werden aus den entsprechenden Polyamid-Granulaten als Fällpulver oder Mahlpulver angeboten. Mahlpulver werden durch Vermahlen in einer Mühle, Fällpulver durch Lösen des Granulates in einem Solvent und Fällen gemäß DE 29 06 647 B1 hergestellt. Bei dem letzteren Verfahren ergibt sich ein Polyamid-Pulver mit einer runden Kornform, die durch den Fällprozess bedingt wird. Im Vergleich zum Fällpulver zeigt das Mahlpulver ein scharfkantiges Korn.

Beispiele für Polyamid 12 - Fällpulver sind zum Beispiel VESTOSINT^{®} 1101, 1111, 1121, 1141 und 1161 (Degussa AG), Beispiele für Polyamid 11 - Mahlpulver zum Wirbelsintern sind zum Beispiel Rilsan^{®} 7050 weiß, T 7280 grau, PT 7050 weiß (Atofina).

Beim Wirbelsinterverfahren werden heiße Metallteile in ein Becken mit fluidisierendem Polymer-Pulver getaucht. Dabei sintert das Pulver auf der heißen Metalloberfläche an und verläuft zu einem homogenen Überzug. Voraussetzung dafür ist, dass die Metalloberfläche eine Temperatur oberhalb des Schmelzpunktes des Polymer-Pulvers hat.

Typischerweise weist eine Polyamid-Beschichtung im Wirbelsinterverfahren Schichtdicken zwischen 200 und 500 µm, in Spezialfällen auch bis ca. 1 000 µm auf. Dünnere Schichten als ca. 200 µm lassen sich im Wirbelsinterverfahren mit herkömmlichen Wirbelsinterpulvern nicht oder nur mit großen Schwierigkeiten realisieren.

In der Beschichtungstechnik hat sich aus der Erfahrung mit marktgängigen Polyamid-Wirbelsinterpulvem eingeprägt, dass ein glatter geschlossener Film mindestens die Stärke von 2 x d 50 des Pulvers benötigt. Da handelsübliche Wirbelsinterpulver einen D 50 -Wert von 95 bis 120 µm haben, ergibt sich eine Untergrenze bei der Beschichtung von ca. 200 µm.

Die Schwierigkeiten bei dünneren Filmstärken beruhen auf der Tauchzeit und der Objekttemperatur:

Das heiße Objekt darf einerseits nur kurzzeitig getaucht werden, damit die Schichtdicke auf der Oberfläche nicht zu sehr anwächst, andererseits benötigt das Pulver aber eine gewisse Mindesttauchzeit im Bad, um alle Ecken und Kanten des jeweiligen Objektes so zu benetzen, dass es keine unbeschichteten Fehlstellen gibt.

Für dünne Beschichtungen von 50 bis 200 µm werden daher häufig andere Verfahren als das Wirbelsintern angewendet, wie zum Beispiel ES-Sprühen, Heißsprühen, Tribo-Sprühen und Minicoating.

Das Minicoating ist dem Wirbelsintern am ähnlichsten. Hierbei fallen heiße Metallteile in ein Polyamid-Pulverbad, welches jedoch nicht fluidisiert. Die Metallteile nehmen solange Pulver auf, wie genug Energie zum Aufschmelzen des Polymers vorhanden ist. Es bildet sich zunächst eine raue Beschichtung, da das Bauteil nicht genügend Wärme besitzt, um das angesinterte Pulver zu einer homogenen Schicht verlaufen zu lassen. Falls eine glatte homogene Oberfläche gewünscht wird, kann dies durch Nachwärmen in einem Ofen oder durch Bestrahlen mit einer Wärmequelle erfolgen.

Dieses Verfahren hat vor allem bei kleinen und leichten Metallteilen Anwendung gefunden wie zum Beispiel bei Clips für Miederwaren. Typische Minicoatpulver sind beispielsweise VESTOSINT^{®} 1164, 1174 und 2157 (Degussa) und Rilsan^{®} 1452 MAC (Atofina). Die mittlere Korngröße d 50 solcher Pulver beträgt typischerweise 20 - 70 µm.

Die Schüttdichte der Minicoatpulver ist meist etwas geringer als bei den Wirbelsinterpulvern. Sie liegt in der Regel oberhalb 300 bis 350 g/l.

Typische Minicoatpulver weisen aufgrund ihrer reduzierten Schüttdichte und ihrer feineren Kornverteilung deutlich schlechtere Wirbeleigenschaften auf als spezielle Wirbelsinterpulver. Handelsübliche Feinpulver und Minicoat-Pulver sind für den typischen Wirbelsinterprozess nur eingeschränkt zu gebrauchen.
In jüngster Zeit gibt es jedoch verstärkt Anfragen nach Polyamid-Pulvern, mit denen dünne Schichten im Bereich von 50 bis 200 µm im Wirbelsinterverfahren erzielt werden sollen.

Die Pulver aus EP-A-0 536 731 haben einen mittleren Teilchendurchmesser im Bereich von 5 -20 µm. Der Bereich von 5 µm oder weniger darf dabei sogar bis zu 25 % betragen. Für homogene Überzüge mit dem Wirbelsinterverfahren sind diese Pulver nicht geeignet.

DE 44 21 454 A beschreibt die Herstellung von Polyamid-Feinstpulvern. Auch hier gelten die o. a. Ausführungen, nach dem solche Feinstpulver zur Erzielung homogener dünner Beschichtungen nach dem Wirbelsinterverfahren ungeeignet sind.

Die nach US-A-4 687 838 hergestellten Polyamid-Pulver haben nach Beispiel 1 dieser Schrift eine gröbere Korngrößenverteilung. Der damit hergestellte Wirbelsinterüberzug beträgt 300 µm.

EP-A-0 863 174 beschreibt die Herstellung von Polyamid-Fällpulvem mit enger Korngrößenverteilung und Schüttdichten über 400 g/l. In den Beispielen sind die Korngrößen höher als die erfindungsgemäßen Werte. Auch wird auf Seite 2, Zeile 25 aufgeführt, dass für das Wirbelsinterverfahren gröbere Pulver mit einem hohen Anteil zwischen 60 und 150 µm erforderlich sind.

Eine solche Anwendung ist beispielsweise das chromfreie Beschichten von Metallrohren als Korrosionsschutz in der Automobilindustrie, wie beispielweise US 6.276.400 B 1 beschrieben. Für eine kontinuierliche Rohrbeschichtung gemäß US 6.276.400 B1 ist das klassische Minicoat-Verfahren ungeeignet. Das Verfahren erfordert ein Wirbelsinterbecken, durch das das Rohr kontinuierlich gezogen wird. Die Erwärmung des Rohres auf eine Temperatur oberhalb des Schmelzpunktes des Polymers erfolgt dabei lokal und bevorzugt durch Induktion.

Die Beschichtung solcher Rohre für die Automobilindustrie verlangt extreme Anforderungen an Schichtdicke und Homogenität der Beschichtung. Einerseits soll die Schichtdicke zwecks Gewichtsersparnis so gering wie möglich sein, andererseits dient die Polyamidschicht als Korrosionsschutz an einem sicherheitsrelevanten Bauteil (Bremsleitung, Kraftstoffleitung) und darf daher keinerlei Fehlstellen oder Schwankungen bei den mechanischen Werten aufweisen.

Es bestand daher die Aufgabe, ein Polyamid-Wirbelsinterpulver für das Dünnschichtwirbelsintem zu entwickeln, welches sehr homogene, dünne Beschichtungen ermöglicht.

Überraschend wurde nun gefunden, dass sich mit dem erfindungsgemäßen Polyamid-Pulver sehr homogene Schichtdicken zwischen 50 und 200 µm im klassischen Wirbelsinterverfahren ermöglichen lassen.

Das erfindungsgemäße Polyamid-Pulver zeichnet sich im Vergleich zu handelsüblichen Polyamid-Wirbelsinterpulvern durch feine Partikel aus und ähnelt in der Partikelgröße einem Minicoat-Pulver. Der mittlere Korndurchmesser d 50 des erfindungsgemäßen Pulvers beträgt 20 bis 90 µm. Die Kornobergrenze liegt bei 125 µm. Die vergleichsweise geringe Partikelgröße ermöglicht dünne und gleichmäßige Beschichtungen unterhalb 200 µm.

Damit das Pulver dennoch gute Wirbeleigenschaften aufweist, weist das erfindungsgemäße Pulver spezielle Charakteristika auf. Anders als herkömmliche Minicoatpulver und Feinpulver für die Lackindustrie ist das erfindungsgemäße Pulver frei von Feinstanteil, der Gehalt < 5 µm liegt weit unter 1 %.

Weiteres charakteristisches Merkmal des erfindungsgemäßen Pulvers ist die besonders runde Kornform, die eine signifikante Verbesserung der Wirbeleigenschaften erreicht.

Das erfindungsgemäße Pulver weist einen Gehalt von über 75 % an weitgehend kugelförmigen (sphärischen) Partikeln auf, bei denen das Korn in alle drei Raumachsen x, y und z auf ± 10 % die gleiche Größe hat.

Bevorzugt weist das erfindungsgemäße Pulver einen Gehalt von über 80 % an weitgehend kugelförmigen (sphärischen) Partikeln aufweist, bei dem das Korn in alle drei Raumachsen x, y und z auf ± 10 % die gleiche Größe hat.

Die Partikelverteilung wird über Laserbeugung (Malvern) gemäß DIN EN ISO 4610 bestimmt, die Kornform wird durch moderne Bildauswertesysteme und REM-Aufnahmen bestimmt.

Bevorzugt werden die erfindungsgemäßen Pulver aus einem Fällpulver gemäß DE 29 06 647 B1 hergestellt. Dieses Verfahren bietet gegenüber einem gewöhnlichen Mahlpulver bereits ein runderes Ausgangsmaterial. Der Besonderheit des erfindungsgemäßen Pulvers ist die mechanische Nachbehandlung, bei der vorhandene Ecken und Kanten entsprechend dem Bedarf entsprechend abgerundet werden. Dies erfolgt typischerweise in langsam laufenden Mühlen oder speziellen Prallaggregaten, die ein vollständiges Zerkleinern/Auseinanderbrechen der Partikel vermeiden, aber Ecken und Kanten abschlagen bzw. abrunden.

Damit das Pulver besonders leicht und gleichmäßig verläuft, werden niedrigviskose Polyamidpulver bevorzugt. Das erfindungsgemäße Pulver hat eine relative Lösungsviskosität (eta-rel) gemäß EN ISO 307 von 1,30 bis 1,65, bevorzugt von 1,40 bis 1,63.

Um das Fließverhalten beim Aufschmelzen des Dünnschichtwirbelpulvers zu verbessern, können optional aminoendgruppenhaltige und/oder carboxylgruppenhaltige Regler zur Verlangsamung der Nachkondensation zugesetzt werden. Dies können zum Beispiel Dicarbonsäuren oder Diamine sein. Je nach Regler liegt das bevorzugte Verhältnis Aminoendgruppen zu Carboxylendgruppen bei ≤ 1 : 3, beziehungsweise bei ≥ 3 : 1.

Optional kann die Riesel- und Wirbelbarkeit des erfindungsgemäßen Pulvers durch Zugabe von Zuschlagstoffen optimiert werden. Dies können feinverteilte anorganische Zuschlagstoffe sein. Handelsübliche Beispiele sind Titandioxide, Aluminiumoxide oder hochdisperse Kieselsäuren.

Anwendung finden die erfindungsgemäßen Polyamid-Pulver vor allem im Dünnschicht-Wirbelsinterverfahren. Eine typische Anlage zum Beschichten von Metallrohren ist im Folgenden beschrieben.

Die erfindungsgemäßen Polyamid-Pulver können mit allen bekannten Wirbelsinterverfahren aufgetragen werden. Besonders geeignet zum chromatfreien Beschichten im Wirbelsinterverfahren eignet sich die nachfolgend beschriebene Anlage. Die Anlage ist automatisch und dient zur Außenbeschichtung von Rohren durch Wirbelsintern. Sie besteht aus den folgenden Teilen:
1) der Vorbehandlungsanlage zum Reinigen der im Anlieferungszustand meist fettigen Rohre;
2) dem Primer (Haftvermittler)-Becken zum Auftragen des Haftvermittlers zwischen Stahloberfläche und Kunststoffschicht (Sprüh- oder Tauchanlage);
3) der Mittelfrequenz-Induktionsspule 1 zum Einbrennen des Primers und wenn ein lösemittelhaltiger Primer eingesetzt wird zum Verdampfen des Lösemittels;
4) dem Radiallüfter zum schnelleren Abführen des verdampften Lösemittels;
5) der Mittelfrequenz-Induktionsspule 2 zur Vorwärmung des Rohres,
6) dem Wirbelsinterbecken mit integrierter Mittelfrequenz-Induktionsspule 3 zum Aufbringen des Beschichtungsmittels. Da das Beschichtungsmittel einen zu geringen dielektrischen Verlustfaktor hat, erwärmt es sich nicht, während das vorgewärmte durchlaufende Stahlrohr sich sehr schnell auf die gewünschte Temperatur erwärmt. Die Schichtdicke wird beim Wirbelsintern maßgeblich durch Vorwärmtemperatur und Tauchzeit geregelt. Im Falle eines durchlaufenden Rohres bedeutet dies, dass die Schichtdicke durch die Generatorleistung und die Vorschubgeschwindigkeit des Rohres verändert werden kann. Beide können am Schaltpult unabhängig voneinander geregelt werden;
7) den Einbauten im Wirbelsinterbecken, bestehend aus Luftdusche oberhalb des Rohres, um Pulveranhäufungen zu vermeiden und den Strömungsleitblechen unterhalb des Rohres, um Pulvermangel und dadurch resultierend Poren an der Unterseite des Rohres zu vermeiden. Nur durch die speziellen Einbauten kann eine gleichmäßige Schichtdicke sowohl radial, als auch axial gewährleistet werden;
8) der Mittelfrequenz-Induktionsspule 4 zur Glättung der nicht komplett aufgeschmolzenen Polyamid-Schicht;
9) der Schmelzstrecke, die benötigt wird, um den nach dem Austritt des Rohres aus der Mittelfrequenz-Induktionsspule 4 anhaftenden Polyamidbelag durchzuschmelzen und glattzuschmelzen. Die Schicht ist während des Durchlaufens noch heiß und weich und kann daher leicht verletzt werden. Das Rohr darf daher in dieser Phase nicht über Rollen geführt werden.
10) der Luftdusche zum Vorabkühlen der Rohroberfläche. Die Rohroberflächentemperatur wird dadurch unter den Schmelzpunkt des Polyamids geregelt;
11) der Wasserkühlung. Das Rohr läuft in eine Wasserrinne, in der die Schicht weiter abkühlt und erhärtet, sodass hier wieder eine Führung über Rollen möglich ist.

Die Induktionsspulen unter Pkt. 5, 6 und 8 werden je nach angestrebter Schichtdicke eingesetzt. Folgende Möglichkeiten des Induktionsspulen-Einsatzes sind dabei gegeben: 5 und 8,
5 und 6,
5, 6 und 8,
6,
6 und 8.

Die Rohre werden durch Mittelfrequenzinduktion erwärmt. Mit dem Verfahren können Rohrstücke in einer gewünschten Länge zu einem endlosen Strang zusammengekoppelt und im horizontalen Durchlaufverfahren mit Kunststoffpulver außenbeschichtet werden. Die homogene Schichtdickenverteilung der Rohraußenbeschichtung liegt zwischen 120 und 180 µm, bevorzugt bei 150 µm. Auf die Rohroberfläche wird ein handelsüblicher Haftvermittler (z.B. VESTOSINT Haftvermittler WS 5) aufgetragen. Die Schichtdicke des abgelüfteten Primers liegt zwischen 5 und 8 µm. Der Haftvermittler hat einen Feststoffgehalt von ca. 8 %.

Die mit dem erfindungsgemäßen Verfahren hergestellten Rohre eignen sich besonders als Hydraulik- und Bremsleitungen für z.B. die Automobilindustrie.

Das erfindungsgemäße Pulver, seine Herstellung und Anwendung wird durch die nachfolgenden Beispiele näher erläutert, ohne es auf diese Beispiele einzuschränken.

### Beispiel 1:

### Herstellung des erfindungsgemäßen Pulvers A:

Ein mit Dicarbonsäuren geregeltes Polyamid 12-Granulat mit einem Aminoendgruppengehalt von 40 mmol/l und einem Carboxylendgruppengehalt von 180 µmol und einem eta-rel von 1,55 wird gemäß DE 29 06 647 aus heißem Alkohol gefällt. Das gefällte Pulver besitzt ein mittleres Korn d 50 von 61 µm und weist einen Anteil von rund 70% an sphärischen Partikeln auf, bei denen das Korn in allen drei Raumachsen x, y und z auf ± 10 % die gleiche Größe hat.

Das so hergestellte Rohpulver ist näherungsweise vergleichbar mit einem typischen Handelsprodukt für Polyamid-Feinpulver wie zu Beispiel VESTOSINT 2157.

Das Rohpulver wird in einem weiteren Arbeitsschritten zunächst von Grobpartikeln > 125 µm über ein Sieb befreit und in einer Pralltellermühle (Hybridizer, NARA) 10 Minuten nachbearbeitet. Das so bearbeitete Pulver wird anschließend in einem Sichter von Feinstanteil befreit. Der Anteil < 5 µm beträgt 0,1 %.

Das so erhaltene Pulver hat ein mittleres Korn d 50 von 52µm und weist einen Anteil von 84 % an sphärischen Partikeln auf, bei denen das Korn in allen drei Raumachsen x, y und z auf ± 10 % die gleiche Größe hat. Das Pulver hat eine Schüttdichte von 380 g/l. Das Pulver wird mit 1,0 Teilen Flammruß und 0,05 Teilen bezogen auf 100 Teile Polyamidpulver einer hochdispersen Kieselsäure (Aerosil 200) versetzt.

### Beschichtungsversuche

Das erfindungsgemäße Pulver aus Beispiel 1 wird auf der oben beschriebenen Versuchsanlage zur Beschichtung von Metallrohren mit Hilfe einer Induktionserwärmung verarbeitet. Zum Vergleich wurden mehrere handelsübliche Polyamid-Pulver (Degussa AG) gegenübergestellt. Dabei handelt es sich um VESTOSINT 1111 schwarz als handelsübliches Wirbelsinterpulver, VESTOSINT 1174 weiß, ein mit Titandioxid ausgerüstetes Minicoatpulver, und VESTOSINT 2157 schwarz, ein Feinpulver, wie es u.a. in Coil Coating Lacken Anwendung findet. Die Ergebnisse sind in Tabelle 1 zusammengefasst.

Alle Rohre wurden mit dem VESTOSINT Haftvermittler WS 5 (Degussa) vorbehandelt, Schichtdicke ca. 5 µm.

**Tabelle 1**

| Beschichtungsversuche | | | | | | | |
|---|---|---|---|---|---|---|---|
| | | | Anteil | Rohr, erzielte | max. radiale Schichtdicken- | | |
| Produkte | D 50 [µm] | < 5% [%] | kugelf. Teile [%] | Schichtdicke [µm] | differenz [µm] | Stauben [sec] | Wirbeln [Note] |
| **Polyamid-Pulver A** | **52** | **0,1** | **84** | **120** | **<5** | **<5** | **1-2** |
| VESTOSINT 2157 | 57 | 0,5 | ~70 | 120 | 10 | 10 | 3 |
| VESTOSINT 1111 | 100 | 0,1 | ~65 | 200 | <5 | <5 1 | |
| VESTOSINT 1174 | 40 | 8 | ~70 | 130 | 20 | >15 | 5 |

Mit dem erfindungsgemäßen Polyamid-Pulver wird auf dem Metallrohr eine sehr homogene Beschichtung erzielt, deren Qualität an diejenige eines klassischen Wirbelsinterpulvers heranreicht. Das Pulver zeigt vergleichbar gute Verarbeitungseigenschaften beim Stauben und Wirbeln. Mit dem erfindungsgemäßen Polyamid-Pulver lassen sich gewünschte Schichtdicken unterhalb 200 µm erzielen. Im Versuch ließen sich einwandfreie Schichtdicken von 120µm reproduzierbar ohne Fehlstellen erzielen.

Dagegen ließen sich mit handelsüblichen Wirbelsinterpulvem nur Schichtdicken ab 200 µm in vergleichbarer Qualität erzielen.
Herkömmliche, handelsübliche Minicoat- und Feinpulver zeigen im Vergleich deutlich schlechtere Wirbeleigenschaften und stärkere Staubentwicklung am Wirbelbecken.

Auf der Testanlage lassen sich zwar geschlossene Schichten von 120 bis 130 µm erzielen, diese weisen aber eine deutlich größere Inhomogenität bei der Beschichtung auf, was vor allem auf das schlechtere Wirbelverhalten zurückgeführt wird. Die radiale Schichtdickendifferenz wird durch fotografische Auswertung von Schnittbildern bestimmt.

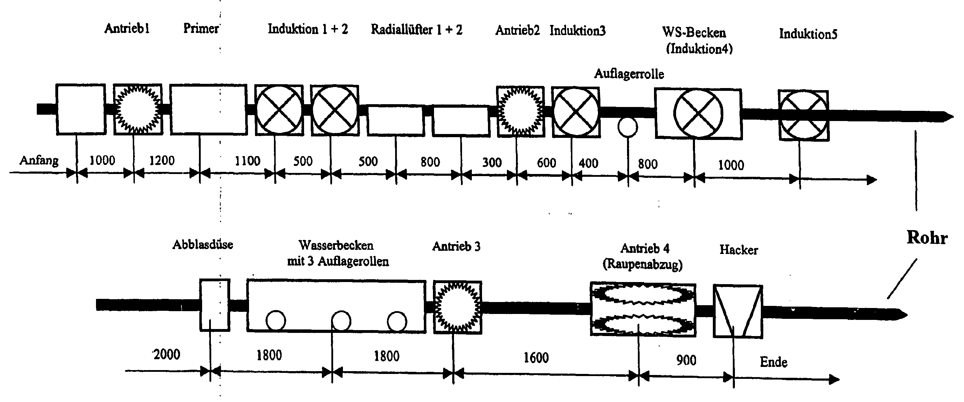

## Patentansprüche

1. Verfahren zum Beschichten von Metalloberflächen im Dünnschicht-Wirbelsinterverfahren,
**dadurch gekennzeichnet,**
**dass** ein Polyamid-Pulver verwendet wird, wobei
- das Pulver eine mittlere Korngröße d 50 zwischen 20 und 90 µm besitzt,
- der Feinanteil < 5µm unter 1 % liegt und
- das Pulver mindestens 75 % an sphärischen Partikeln aufweist, bei denen das
- Korn in allen drei Raumachsen x, y und z auf ± 10 % die gleiche Größe hat,
womit homogene Schichtdicken zwischen 50 und 200 µm eingestellt werden.

2. Polyamid-Pulver gemäß Anspruch 1,
**dadurch gekennzeichnet,**
**dass** das Pulver mindestens 80 % an sphärischen Partikeln aufweist, bei denen das Korn in allen drei Raumachsen x, y und z auf ± 10 % die gleiche Größe hat.

3. Polyamid-Pulver gemäß Anspruch 1,
**dadurch gekennzeichnet,**
**dass** das Pulver ein Polyamid ausgewählt aus der Gruppe umfassend Polyamid 11 und Polyamid 12 enthält.

4. Polyamid-Pulver gemäß einem der vorhergehenden Ansprüche,
**dadurch gekennzeichnet,**
**dass** das Polyamid-Pulver einen eta-rel von 1,30 bis 1,65 enthält.

5. Polyamid-Pulver gemäß einem der vorhergehenden Ansprüche,
**dadurch gekennzeichnet,**
**dass** das Polyamid-Pulver einen eta-rel von 1,40 bis 1,63 enthält.

6. Polyamid-Pulver gemäß einem der vorhergehenden Ansprüche,
**dadurch gekennzeichnet,**
**dass** das Polyamid-Pulver geregelt ist und ein Verhältnis Aminoendgruppen zu Carboxylendgruppen von ≥ 3 : 1 oder ≤ 1 : 3 enthält. 00 µm beträgt.

## Claims

1. Method for coating metal surfaces by the thin-layer fluidized-bed coating process, **characterized in that** a polyamide powder is used, where
- the powder has a median grain size d 50 of from 20 to 90 µm,
- the content of fines < 5 µm is below 1%, and
- the powder has at least 75% of spherical particles in which all three spatial axes x, y and z of the grain have the same dimension to within ± 10%.
whereby homogeneous layer thicknesses of from 50 to 200 µm are obtained.

2. Polyamide powder according to Claim 1,
**characterized**
**in that** the powder has at least 80% of spherical particles in which all three spatial axes x, y and z of the grain have the same dimension to within ± 10%.

3. Polyamide powder according to Claim 1,
**characterized**
**in that** the powder comprises a polyamide selected from the group consisting of nylon-11 and nylon-12.

4. Polyamide powder according to any of the preceding claims,
**characterized**
**in that** the polyamide powder has an ηᵣₑₗ of from 1.30 to 1.65.

5. Polyamide powder according to any of the preceding claims,
**characterized**
**in that** the polyamide powder has an ηᵣₑₗ of from 1.40 to 1.63.

6. Polyamide powder according to any of the preceding claims,
**characterized**
**in that** the polyamide powder has been regulated and has a ratio of ≥ 3:1 or ≤ 1:3 between amino end groups and carboxy end groups.

## Revendications

1. Procédé de revêtement de surfaces métalliques dans le procédé de frittage à tourbillons en couche mince, **caractérisé en ce que** l'on utilise une poudre de polyamide,
- la poudre ayant une grosseur de grain moyenne d50 comprise entre 20 et 90 µm,
- la proportion de fines < 5 µm se situant en dessous de 1%,
- la poudre présentant au moins 75% de particules sphériques, pour lesquelles
- le grain a, dans toutes les trois axes de l'espace x, y et z, la même grandeur à raison de ± 10%, des épaisseurs de couches homogènes comprises entre 50 et 200 µm pouvant ainsi être ajustées.

2. Poudre de polyamide selon la revendication 1, **caractérisée en ce que** la poudre présente au moins 80% de particules sphériques, pour lesquelles le grain, dans toutes les trois axes de l'espace x, y et z, a la même grandeur à raison de ± 10%.

3. Poudre de polyamide selon la revendication 1, **caractérisée en ce que** la poudre contient un polyamide sélectionné parmi le groupe comprenant le polyamide 11 et le polyamide 12.

4. Poudre de polyamide selon l'une quelconque des revendications précédentes, **caractérisée en ce que** la poudre de polyamide contient un eta-rel de 1,30 à 1,65.

5. Poudre de polyamide selon l'une quelconque des revendications précédentes, **caractérisée en ce que** la poudre de polyamide contient un eta-rel de 1,40 à 1,63.

6. Poudre de polyamide selon l'une quelconque des revendications précédentes, **caractérisée en ce que** la poudre de polyamide est réglée contient un rapport groupements terminaux en amino à groupements terminaux en carboxyle de ≥ 3:1 ou de ≤ 1 :3.
